Europäisches Patentamt

European Patent Office

Office européen des brevets

(11) Publication number: 0 220 649
B1

# EUROPEAN PATENT SPECIFICATION

(45) Date of publication of patent specification: 30.08.89

(51) Int. Cl.⁴: **C 04 B 16/06, E 04 C 5/07**

(21) Application number: 86114520.9

(22) Date of filing: 20.10.86

(54) Asbestos-free, wet-formed hydraulic inorganic article and production thereof.

(30) Priority: 21.10.85 JP 235637/85

(43) Date of publication of application:
06.05.87 Bulletin 87/19

(45) Publication of the grant of the patent:
30.08.89 Bulletin 89/35

(84) Designated Contracting States:
BE CH DE FR GB LI

(56) References cited:
EP-A-0 099 053
EP-A-0 155 520
DE-A-3 115 571
JP-A-58 088 161
JP-A-61 163 150
JP-A-61 183 184
US-A-4 524 042

(73) Proprietor: KURARAY CO., LTD.
1621 Sakazu
Kurashiki-City Okayama Prefecture 710 (JP)

(72) Inventor: Genba, Tsuneo
256-13, Kanemoto
Okayama-City Okayama-Pref. (JP)
Inventor: Mizobe, Akio
2-6-34, Fukushima
Okayama-City Okayama-Pref. (JP)
Inventor: Okazaki, Masaki
3-996-65, Hirai
Okayama-City Okayama-Pref. (JP)
Inventor: Itadani, Sotaro
883-1, Tanoue
Kurashiki-City Okayama-Pref. (JP)

(74) Representative: Vossius & Partner
Siebertstrasse 4 P.O. Box 86 07 67
D-8000 München 86 (DE)

## Description

1. Field of the Invention

The present invention relates in one aspect to a wet-formed organic fiber-reinforced inorganic article (hereinafter referred to as a wet-formed inorganic article) which is asbestos-and pulp-free and comprises predetermined amounts of a superfine organic synthetic fiber and a regular size organic synthetic fiber in a predetermined ratio, an inorganic dispersing agent and a high molecular flocking agent and which features high productivity and excellent field performance. In another aspect, the present invention relates to a method for the manufacture of said wet-formed organic fiber-reinforced inorganic article. .

2. Description of the Prior Art

Wet-formed inorganic articles represented by asbestos boards contain asbestos which plays an important role in economically ensuring wet-machinability or wet-formability and acceptable physical properties of such products. However, as the hazardous effects of asbestos on human health were recognized, there has been a keen demand for asbestos-free, wet-formed inorganic articles and, accordingly, development works on pertinent production technologies have been undertaken. A representative method of manufacturing a wet-formed inorganic article is the Hatchek process (cylinder process) and the role of asbestos in this process is to ensure wet-formability, e.g. trapping of cement particles, impart various physical strength characteristics such as bending strength, tensile strength and impact strength, and improve such other physical properties as flame retardation (JIS, Surface Test), but the very excellent characteristics possessed by asbestos have made it difficult to provide substitutes and it is the common knowledge in the art that a single known substance can never replace asbestos. Thus, as fairly different characteristics are required to achieve wet-formability on the one hand and better physical properties on the other hand, most of the proposals heretofore made are directed to substitution of asbestos with one material for each of these divergent requirements.

For the purpose of attaining improved physical properties, that is to say, for reinforcement, organic synthetic fibers such as polyvinyl alcohol fiber, polyacrylonitrile fiber, aramide fiber, etc. and inorganic fibers such as alkali-resistant glass fiber, etc. have been employed, and because of their superior reinforcing effects, polyvinyl alcohol fiber and polyacrylonitrile fiber in particular have gathered attention and have been used in large quantities, mainly in Europe, as substitutes for asbestos.

On the other hand, from the standpoint of replacing asbestos in the function of imparting wet-formability, the use of natural pulp has been proposed by the majority of innovators. However, wet-formed articles incorporating natural pulp have the drawback that because of the degradability, water absorption and inflammability of the pulp itself, such articles are inadequate in durability or serviceable life, dimensional stability, freeze-thaw stability, flame retardation, and other parameters. To overcome these shortcomings of pulp, several proposals have been made. For example, the invention described in Japanese Patent Publication Kokai No. 60-5049 is intended to increase the degree of beating of pulp to a sufficient extent to improve the trapping rate for cement particles and to thereby reduce the required amount of pulp and mitigate the problems associated with the inclusion of pulp. The same invention further teaches a technology for improving the cement trapping effect by relying on the interaction of pulp and a swellable inorganic filler such as sepiolite, bentonite or the like. The present inventors also investigated natural pulp and auxiliary agents and reached the conclusion that the use of pulp in a proportion of about 3 percent was essential to the stable production of wet-formed articles. It was evident, however, that this amount of pulp does not compensate for the adverse effects of pulp mentioned hereinbefore.

On the other hand, it has also been attempted to replace natural pulp with synthetic pulp. For example, the use of synthetic polyolefin pulp has been proposed. Although this synthetic pulp resembles asbestos in appearance, it has only a low affinity for cement and is therefore deficient in cement trapping effect. Moreover, because of its low strength, low Young's modulus and poor bonding affinity for cured cement, this synthetic pulp does not contribute to a reinforcing effect at all. Studies on aramide synthetic pulp have also been made. However, like polyolefin pulp, aramide pulp has only a low affinity for cement and, therefore, provides only a scarce trapping effect. Moreover, although it has high fiber strengths, this pulp displays only poor adhesivity to cement and, in addition, is very costly. Under the circumstances, the present inventors conducted an intensive research to develop an asbestos- and pulp-free wet-formed article that can be provided economically and accomplished the invention described in Japanese Patent Application No. 59-18063. Thus, the invention mentioned just above was directed to a wet-formed inorganic article incorporating a superfine vinylon fiber having defined physical properties and a fiber size not greater than 0.5 denier and a method for manufacture of said wet-formed inorganic article. The invention thus taught an epochal technology which, as the result of the combined use of such vinylon fiber and a flocking agent, permits stable wet-forming without the aid of pulp and, as the result of the excellent reinforcing action of said superfine vinylon fiber, provides fairly satisfactory physical characteristics, quite beyond the imagination of most people in the field. Thus, said superine vinylon fiber is an excellent substitute for asbestos, which is not only able to provide adequate wet-forming characteristics such as the efficient trapping of cement particles but also able to improve the physical characteristics of wet-formed inorganic articles. However, subsequent studies made it clear that the above technology has the following drawbacks. Firstly, the dispersibility of the superfine fiber is not good and, therefore, the product is not fully satisfactory from the marketing and other points of view. Thus, compared with fibers of ordinary size (about 2 deniers), said superfine fiber consists of an exceedingly large number of monofilaments with respect to a given aspect ratio and, therefore, there tends to occur an inter-aggregation of individual fibers and, hence, the superfine fiber tends to be segregated from the cement and other solid components of the product. As a result, the fiber is liable to collect on the surface (reverse side) of the sheet in the course of wet-forming thereby causing a separation of the sheet layers and a napping of the surface, thereby detracting from the aesthetic quality of the product. The reinforcing effect decreases and other problems arise. Secondly, the wet-formed inorganic article manufactured by the above technology is low in deflection property and because of the inadequate tenacity, shows a poor impact resistance.

The present inventors conducted an intensive research to overcome the above-mentioned disadvantages and ultimately accomplished the present invention.

The present invention provides a substantially asbestos-free, pulp-free, low-cost inorganic article having excellent bending strength, tensile strength and toughness qualities.

The present invention is directed to a wet-formed inorganic article which comprises, based on the total solid content of the wet-forming composition, 0.1 to 1.5 weight percent of a superfine organic synthetic fiber (A) having a size of 0.05 to 0.5 denier, a strength of at least 6 grams per denier and an aspect ratio (the ratio of the mean length to the mean diameter of fiber) of 200 through 1500 (hereinafter referred to sometimes as superfine fiber), 0.5 to 5.0 weight percent of a regular-size organic synthetic fiber (B) having a size of 0.6 to 20 deniers, a strength of at least 6 grams per denier and an aspect ratio of 200 through 1500 (hereinafter referred to sometimes as regular fiber), 0.01 to 5 weight percent of an inorganic dispersing agent, a suitable amount of a high molecular flocking agent and the remainder of a hydraulic inorganic material, (A) and (B) taken together accounting for 0.6 to 6.5 weight percent and (A)/(B) being in the range of 0.1 to 1. In another aspect, the present invention is directed to a method for manufacturing said wet-formed inorganic article which comprises adding, at 2 stages upstreams of the wet-forming vat, 5 to 500 ppm of a high molecular flocking agent to a slurry consisting of a hydraulic material such as cement, 0.1 to 1.5 weight percent or a superfine organic synthetic fiber A and 0.5 to 5.0 weight percent of a regular size organic synthetic fiber B, (A + B) accounting for 0.6 to 6.5 weight percent and A/B being equal to 0.1 to 1, and 0.01 to 5 weight percent of an inorganic dispersing agent.

The first feature of the present invention lies in the use of, as aforesaid, a defined superfine fiber and an ordinary size fiber in defined proportions and amounts. While a superfine fiber generally offers excellent cement-trapping and other wet-forming characteristics as well as excellent reinforcing effects, it has the disadvantage that its poor dispersibility makes it difficult to harness the intrinsic desirable properties possessed by the fiber and that because of the unusually good adhesivity to cement and the like, the wet-formed article incorporating such fiber has low deflection and poor toughness qualities. The present inventors thought that by reducing the amount of superfine fiber to a comparatively low level and using an ordinary size fiber in combination with superfine fiber, various quality parameters of wet-formed articles could be improved. Accordingly, research and experimentation were started for finding the optimum combination of such different fibers. It was found ultimately that when the total amount and proportions of such superfine fiber and ordinary size fiber are respectively confined to certain ranges while the level of addition of said superfine fiber is held to a low level, there are realized surprisingly remarkable improvements in dispersibility and toughness, the effect of the inorganic dispersing agent to be described hereinafter also contributing to the improvements.

The above-mentioned superfine fiber must have a fineness of 0.05 to 0.5 denier, a strength of at least 6 grams per denier and an aspect ratio of 200 to 1500 and be present in the proportion of 0.1 to 1.5 percent. If the fineness is in excess of 0.5 denier, the superfine fiber cannot display a sufficient trapping effect for cement and the like. A superfine fiber less than 0.05 denier in size is difficult to manufacture economically and, in the working of the present invention, does not make for adequate dispersibility and, hence, does not display a sufficient reinforcing effect. The preferred fineness is 0.1 to 0.3 denier. The superfine fiber must have a strength of at least 6 grams per denier. If the strength is less, no adequate reinforcing effect can be expected. The aspect ratio of the superfine fiber is 200 to 1500 and preferably 300 to 800. If the aspect ratio is less than 200, the reinforcing effect is sacrificed. If the aspect ratio is more than 1500, the dispersibility is undesirably very low. The level of addition is preferably as low as 0.1 to 1.5 percent and more desirably 0.3 to 0.7 percent. If the proportion is less than 0.1 percent, the cement trapping effect is inadequate, while more than 1.5% of the superfine fiber detracts from dispersibility. As the superfine fiber, any organic synthetic fiber can be employed only if it meets the above-mentioned requirements. Generally, however, polyvinyl alcohol type fiber and polyacrylonitrile type fiber which have satisfactory bonding affinities for cement and other hydraulic materials are particularly desirable. These fibers may be used alone or in combination. In terms of adhesive affinity for hydraulic materials, polyvinyl alcohol the fiber is the most suited.

The ordinary size (denier) fiber mentioned hereinbefore has a fineness of 0.6 to 20 deniers, a strength of at least 6 grams/denier, and an aspect ratio of 200 to 1500, and is used in a proportion of 0.5 to 5.0 percent. If the fineness is less than 0.6 denier, wet-formed inorganic articles such as boards having sufficient toughness cannot be obtained. If the fineness of the fiber exceeds 20 deniers, the fiber does not exert a satisfactory reinforcing effect. For the same reasons as mentioned for the superfine fiber, the

3

strength and aspect ratio of said ordinary size fiber are preferably within the ranges specified above. As to the level of addition, the use of less than 0.5% does not bring forth a sufficient reinforcing effect, nor does it contribute much to the improvement of toughness. If more than 5% is used, dispersibility is sacrificed and, moreover, it is uneconomical, too. The ordinary size fiber used in accordance with the present invention is an organic synthetic fiber that meets the above-mentioned requirements. Just for the same reasons mentioned above for the superfine fiber, polyvinyl alcohol and polyacrylonitrile type fibers are particularly desirable and may be used either singly or in combination. In terms of adhesivity to hydraulic inorganic materials and in the effect of use in combination with superfine polyvinyl alcohol type fiber, the use of polyvinyl alcohol ordinary size fiber is the most desirable.

The most important feature of the present invention is that the sum (A+B) of amounts of said superfine fiber A and ordinary size fiber B is 0.6 to 6.5 percent and that the ratio (A/B) is 0.1 to 1. If (A+B) is less than 0.6%, the reinforcing effects such as bending strength, tensile strength and other characteristics are not sufficient. If the sum (A+B) exceeds 6.5 percent, the dispersibility is poor and it is uneconomical, too. The dispersibility is particularly good when the (A/B) ratio is in the range of 0.1 to 1 and preferably in the range of 0.2 to 0.5. In the above range, bending strength, tensile strength, toughness and impact resistance are remarkably improved to give durable boards and other shaped articles. These effects are respectively beyond the sum of effects of the two component fibers and although the cause for such synergistic effects is unknown, they are realized only when the above-mentioned requirements of the present invention are satisfied.

The second feature of the present invention is concerned with the use of a defined type of an inorganic dispersing agent for the purpose of improving the dispersibility of said superfine and ordinary size organic synthetic fibers and providing a homogeneous wet-forming slurry containing a hydraulic material such as cement. The inorganic dispersing agent mentioned above is exemplified by sepiolite, attapulgite, paligorskite and/or sodium bentonite (hereinafter referred to briefly as sepiolite or the like), and these dispersing agents may be used singly or in combination. The preferred level of addition of such a dispersing agent is 0.01 to 5 percent. If the proportion is less than 0.01%, the dispersing effect on the superfine fiber, etc. is insufficient. If the amount of said dispersing agent exceeds 5 percent, the viscosity of the slurry is increased so much that both the drainage on the cylinder and the dehydration of the felt are decreased. This decreased dehydration causes water cracking on the making roll, the difficulty of pressing, and the consequent decrease in the apparent specific gravity of the product, decreased reinforcing effect, increased water absorption and consequent increases in dimensional change, decreased freeze-thaw stability and other problems, not to speak of economic disadvantages. On the other hand, the use of the dispersing agent in excess of 1% does not bring forth any significant additional effect and in view of the possible adverse influence of the inorganic dispersing agent and further from economic points of view, the range of 0.1 to 1 percent is recommended. The inorganic dispersing agent is used more effectively when predispersed into a colloidal form.

The third feature of the present invention resides in the use of a high molecular flocking agent. The high molecular flocking agent is an indispensable component for enhancing the trapping or capture of solid ingredients such as cement powder. This flocking agent may be a commercial flocking agent, and an anionic flocking agent is particularly preferred. The level of addition is 5 to 500 ppm and more preferably 50 to 200 ppm based on the total solid content of the wet-forming composition. If the amount of flocking agent is less than 5 ppm, the flocking effect on solids is insufficient. On the other hand, if 500 ppm is exceeded, drainage is too good to provide an adequate water head in the wet-forming vat so that no uniform sheet is formed and felt soiling may take place. Moreover, it is uneconomical, too. Part of the high molecular flocking agent so added is eliminated in the course of wet forming so that all of its amount does not remain in the wet-formed product.

As the hydraulic inorganic material, various cements such as ordinary Portland cement, blast furnace cement, silica cement, alumina cement and the like can be employed. It is also possible to use calcium sulfate hemihydrate (dried gypsum) or calcium sulfate dihydrate (gypsum) in combination with slag or further with cement.

As further additives, various materials adapted to improve the throughput, processability, formability and product performances can be employed in combination. For the purpose of preventing interlayer separation or delamination, improving the conformity to the making roll, or imparting the surface flatness, for instance, superfine inorganic materials having a diameter or fiber length in the range of $1 \times 10^{-2}$ to $1 \times 10^{-4}$ mm can be used in conjunction. Representative of such superfine inorganic materials are natural or synthetic carbonates such as heavy calcium carbonate, light calcium carbonate, etc., kaolin, clay, silica flour, talc, fly ash, etc., and fibrous wollastonite. If the diameter or fiber length is in excess of the abovementioned range, the materials can be pulverized or otherwise comminuted before using. The preferred level of addition is 1 to 20 percent. Sepiolite and the like which are used in accordance with the present invention are equivalent, in effect, to the above-mentioned materials in the range of 1 percent and more and, therefore, can be substituted by the latter within the range. Aside from the above, lightweight aggregates (for example, foamed perlite, silas balloon*, foaming agents, etc.), blowing agents, phlogopite,

*Porous sand obtained by calcinating foamed eruptive sand from a volcano.

muscovit, serpentine, siliceous sand and so on can also be added. As fibrous materials, rock wool, slag wool, ceramic wool, powdered glass fiber, etc. can be employed. Moreover, synthetic pulp and natural pulp can also be employed, although these materials are preferably not used in the light of the objects of the present invention.

The wet-forming method according to the present invention may be practiced generally in accordance with the conventional wet-forming process just as papermaking process. Thus, the superfine fiber, ordinary size fiber, inorganic dispersing agent, etc. are mixed and dispersed in an ordinary mixer such as a pulper, followed by introduction of cement to prepare a wet-formable slurry of about 10 to 30% concentration. Then, while said high molecular flocking agent as well as water is added thereto, the slurry is processed on a cylinder or Fourdrinier machine to provide a wet-formed article. The high molecular flocking agent is preferably added immediately upstream of the wet-forming vat. Thus, after addition of the flocking agent, the slurry should not be subjected to intense mechanical stirring forces to avoid destruction of the flocks formed.

The inorganic dispersing agent is preferably mixed and stirred with the organic synthetic fibers and cement. This results in the formation of a homogeneous slurry. And the addition of said flocking agent to such a homogeneous slurry produces uniform flocs and, hence, a homogeneous wet-formed article. Even if the dispersing agent cannot be added at the stage of mixing organic synthetic fibers with cement, it should at any rate be added before the addition of said flocking agent. Otherwise, no sufficient dispersing effect can be expected.

The present invention is characterized by the use of specified amounts of superfine and regular-size organic synthetic fibers in a specified ratio and the use of an inorganic dispersing agent in combination with said fibers. As the consequences, the dispersion of superfine fiber which would otherwise be very difficult is made efficient beyond expectations. Furthermore, in terms of physical properties, not only are the bending strength and the tensile strength improved but the toughness is increased far beyond the anticipated level. There also are realized improvements in impact strength and durability. Thus, the present invention meets the demand for wet-formed articles having excellent performance qualities notwithstanding the absence of asbestos and pulp.

The following examples are intended to illustrate the present invention in further detail.

Examples 1 to 4, and Control Examples 1 to 7

Using a cylinder wet machine (Hatschek process), the compositions indicated in Table 1 were wet-formed.

(i) Description of the raw materials

PVA superfine fiber: 0.20 denier, tensile strength 14.8 g/denier, Young's modulus 310 g/denier, fiber length 4 mm, aspect ratio 890.

PVA regular fiber: 1.8 denier, tensile strength 14.0 g/denier, Young's modulus 315 g/denier, fiber length 6 mm, aspect ratio 430.

Sepiolite: Milcon SS (manufactured by Showa Kogyo)

Silica flour: SF Powder (manufactured by Japan Metals & Chemicals Co., Ltd.)

Pulp: NUKP (beaten to Canadian freeness 100 ml)

Cement: Ordinary Portland cement

Flocking agent: Sanflock AK-100 (manufactured by Sanyo Chemical Industries, Ltd.)

(ii) Composition: Summarized in Table 1.

(iii) Method of manufacturing a board

A pulper equipped with a slasher is charged with white water and a predetermined amount of a colloidal dispersion of sepiolite and silica flour is added and stirred. Then, PVA superfine fiber and PVA regular fiber are added, followed by addition of ordinary Portland cement. The mixture is stirred for about 3 minutes, after which it is transferred to the chest for use as a slurry. The solid content of the slurry at this stage is about 10 percent. In the mixing box upstreams of the wet-forming vat, a solution of the flocking agent (1 g/l) is added at the level of 100 ppm and a necessary amount of water is added. The mixture is fed to the vat, wet-formed with a 60-mesh cylinder mold, and taken up on a making roll. After shearing, the wet sheet is pressure-molded at a pressure of 75 kg/cm$^2$ to give a 6 mm thick board. The board is cured at 50°C for 4 hours and allowed to stand at room temperature for 4 weeks.

(iv) Evaluation criteria

State of dispersion: This term means the state of dispersion of fibrous materials. The sheet formed on the cylinder is examined for surface regularity and rated on the two-rank scale: The sample showing only a low degree of irregularity and otherwise being in good condition was rated as ⊚ and the sample showing a high degree of irregularity and being in poorly dispersed condition was rated as X. There were provided two intermediate ranks, ○ and △.

Vat water head: The case in which uniform wet-forming can be accomplished was rated as ○; the case in which substantially no water head can be obtained and uniform wet-forming was impossible was rated as X, and the case which was intermediate between them was rated as △.

Wet-forming yield: This parameter is the rate of trapping the solid ingredients of the slurry, such as cement, inorganic dispersing agent, reinforcing fibers, etc. This yield was calculated from the concentration

($W_1$) of the incoming slurry of the vat and the concentration ($W_2$) of the effluent discharged from the cylinder.

$$\text{Wet-forming yield } (\%) = \left\{ 1 - \frac{\text{Concentration of solids in cylinder effluent } (W_2)}{\text{Concentration of solids in vat incoming slurry } (W_1)} \right\} \times 100$$

Interlayer separation: The uncured sheets from the making roll were delaminated by hand and the separability was qualitatively determined. The condition in which the individual layers are not distinct and are hardly separable was rated as ○; the condition in which the layers can be readily separated was rated as X; and the condition intermediate between them is rated as △.

Apparent specific gravity: In accordance with JIS A 5418, the testpiece is placed in an air dryer equipped with an agitator and after drying at 105°C±5°C for 24 hours, the apparent specific gravity was calculated from the weight and volume after drying.

Bending strength: In accordance with JIS A 1408 "Bending Test Method for Architectural Boards", the strength values in the wet-forming direction (lengthwise direction) and in the direction perpendicular thereto (crosswise direction) were determined and the average of the values was taken. The testpiece was 2.5 cm wide and 10 cm long. The strength was measured with a span of 5 cm. As a change in wet-forming yield substantially represents a change in the proportion of reinforcing fibers, the bending strength value after correction for 97% wet-forming yield was used.

Deflection: The maximum deflection in the center under maximum bending stress was taken.

Impact strength: In accordance with the Izod test of JIS K 7110, the strength in the wet-forming direction only was determined without notching. As in the case of bending strength, correction was made for wet-forming yield.

% Change of length: In accordance with JIS A 5418, the testpiece was dried 60°C for 24 hours to provide a reference length value and, then, immersed in water at 20°C for 24 hours, the length was determined, and the % change of length was calculated.

% Water absorption: In accordance with JIS A 5403, the testpiece was immersed in water at 20°C for 24 hours and, after the water on the surface was wiped off, weighed and dried at 105°C for 24 hours. The testpiece was weighed again and the % water absorption was calculated.

In all the examples of the present invention, the dispersibility of fibers was excellent, the wet-forming yield was high, the vat water head was easy to secure and hence, homogeneous boards without interlayer separation and having excellent appearance qualities were obtained. It is also apparent that the boards obtained in the examples were remarkably superior to the control boards in bending strength and impact strength.

The board of Control Example 1 contains pulp and an ordinary size fiber as a reinforcement. Although the wet-formability was fairly satisfactory, the use of pulp resulted in deterioration of % water absorption and % change of length, with the consequent decreases in durability, crack resistance and flame retardant property being expected. Control Example 2 is a control example containing a superfine fiber as the sole fiber reinforcement. Although the wet-forming yield was high, the state of fiber dispersion was not so satisfactory, with interlayer separation being liable to take place, the appearance was not so good, and the deflection and impact strength were low. Control Example 3 is a control board free of the inorganic dispersant sepiolite but otherwise of the same composition as the board of the present invention. In this control example, the dispersibility of fibers was inadequate despite the proper ratio of superfine fiber to regular size fiber, with the result that interlayer separation occurred, the appearance was poor, and the reinforcing effect not as good as desired. It is thus clear that the use of an inorganic dispersing agent such as sepiolite is an essential element of the present invention. Control Example 4 is a board free of a flocking agent but otherwise of the same composition as the board of the present invention. Here, the wet-forming yield was very low and the continuous operation was impossible. Control Example 5 and 6 are boards wherein the ratio of superfine fiber to regular size fiber is outside the range of the present invention. In Control Example 5, because of the scarcity of superfine fiber, the dispersion of regular size fiber was deteriorated and, moreover, the wet-forming yield was markedly reduced. The vat water head could not be obtained so that the board was not homogeneous and inferior in physical properties. As to Control Example 6, because of the excessive proportion of superfine fiber, both the wet-formability and product physical properties were poor just as in the case of Control Example 2. Control Example 7 is a board containing superfine fiber in excess of the range of the present invention. Even though the proportion of regular size fiber was within the range of the present invention, the dispersibility of fiber was very poor, the vat water head was decreased, interlayer separation occurred, and the product board was not homogeneous and had a poor appearance.

It is, thus, clear that the wet-formed boards according to the present invention are markedly superior to the control boards in wet-formability and board physical properties.

6

Example 5 and Control Examples 8 to 9

(i) Description of fibers used

(A) Polyacrylonitrile superfine fiber: 0.3 denier, tensile strength 8.0 g/denier, fiber length 4 mm, aspect ratio 730.

(B) Polyacrylonitrile regular size fiber: 2.4 denier, tensile length 8.5 g/denier, fiber length 5 mm, aspect ratio 320.

(ii) Compositions

The formulations are shown in Table 2. Example 5 corresponds to Example 2 in which polyacrylonitrile type superfine fiber was used in lieu of PVA superfine fiber and polyacrylonitrile type regular size fiber in lieu of PVA regular size fiber. Control Example 8 corresponds to Control Example 1 in which polyacrylonitrile type regular size fiber was used in lieu of PVA regular size fiber. Control Example 9 corresponds to Control Example 3 in which polyacrylonitrile type superfine fiber was used in lieu of PVA superfine fiber.

(iii) Method of manufacture and method of evaluation of boards

Wet-formed boards were manufactured in the same manner as Examples 1 to 4 and Control Examples 1 to 7 except that the compositions were altered as mentioned above in (ii), and evaluated in the manner described hereinbefore. The results are set forth in Table 2.

It will be apparent from Table 2 that whereas the boards according to the present invention are superior to the control boards, the reinforcing effects are slightly inferior as compared with the cases in which PVA fiber was employed (See Table 1).

Table 1

| | | Composition (silica flour, fixed at 5%; the remainder, ordinary portland cement) | | | | | | | Wet formability | | | | Physical properties of product board | | | | | | |
|---|---|---|---|---|---|---|---|---|---|---|---|---|---|---|---|---|---|---|---|
| | | Reinforcing fiber | | | | | | | | | | | | | | | | | |
| | | Superfine fiber A | Regular fiber B | Sum (A+B) | Ratio (A/B) | Pulp | Sepiolite | Flocking agent | State of dispersion | Wet-forming yield (Trapping rate) | Vat water head | Interlayer separation | Apparent specific gravity | Bending strength (kg/cm²) | Deflection (under maximum load) (mm) | Impact strength (kgcm/cm²) | Change of length | Water absorption | Remarks |
| Example of the invention | 1 | 0.2 % | 1.3 % | 1.5 % | 0.15 | 0 | 1 % | 100 m* | ○ | 92 % | ○ | ○ | 1.83 | 285 | 0.60 | 2.5 | 0.12 % | 13 % | |
| | 2 | 0.5 | 1.5 | 2 | 0.33 | " | " | " | ◎ | 97 | ○ | ○ | 1.81 | 310 | 0.80 | 2.8 | 0.13 | 14 | |
| | 3 | " | 2 | 2.5 | 0.25 | " | " | " | ◎ | 95 | ○ | ○ | 1.80 | 338 | 1.10 | 3.1 | 0.12 | 13 | |
| | 4 | 1 | 1.8 | 2.8 | 0.56 | " | " | " | ○ | 95 | ○ | ○ | 1.78 | 332 | 1.05 | 3.0 | " | 14 | |
| Control example | 1 | 0 | 2 | 2 | — | 3 | 0 | 100 | ○ | 93 | ○ | ○ | 1.70 | 290 | 0.60 | 2.4 | 0.21 | 16 | Because of pulp added, % change of length and % water absorption are inferior. |
| | 2 | 2 | 0 | " | — | 0 | 1 | " | △ | 97 | ○ | ○ | 1.82 | 280 | 0.40 | 1.9 | 0.14 | 13 | The surface appearance is slightly poorer. The impact strength is slightly lower. |
| | 3 | 0.5 | 1.5 | " | 0.33 | " | 0 | " | △ | 90 | ○ | △ | 1.80 | 270 | 0.58 | 2.1 | 0.15 | 12 | The surface appearance is poor. |
| | 4 | " | " | " | " | " | 1 | 0 | ○ | 68 | △ | △ | 1.60 | 248 | 0.60 | 2.2 | 0.18 | 20 | Due to the poor wet-forming yield, the physical properties of board are inferior. |
| | 5 | 0.1 | 1.9 | " | 0.05 | " | " | 100 | △ | 72 | × | ○ | 1.72 | 255 | 0.66 | 2.2 | 0.16 | 16 | Due to the poor dispersion of fiber, the appearance is poor. |
| | 6 | 1.2 | 0.8 | " | 1.5 | " | " | " | △ | 90 | ○ | ○ | 1.80 | 285 | 0.52 | 2.0 | 0.13 | 13 | |
| | 7 | 1.7 | 3.3 | 5 | 0.52 | " | " | " | × | 85 | △ | × | 1.45 | 270 | 0.60 | 2.4 | 0.19 | 22 | The appearance is poor. Interlayer separation occurs in the determination of physical properties. |

8

Table 2

| | | Composition (silica flour, fixed at 5%; the remainder, ordinary portland cement) | | | | | | | | Wet formability | | | | Physical properties of product board | | | | | | |
| | | Reinforcing fiber | | | | | | | | State of dispersion | Wet-forming yield (Trapping rate) | Vat water head | Interlayer separation | Apparent specific gravity | Bending strength | Deflection (under maximum load) | Impact strength | Change of length | Water absorption | Remarks |
| | | Superfine fiber A | Regular fiber B | Sum (A+B) | Ratio (A/B) | Pulp | Sepiolite | Flocking agent | | | | | | | | | | | | |
| | | % | % | % | | | % | %ª | | % | | | | kg/cm | mm kgcm/cm | | % | % | |
| Example of the Invention | 5 | 0.5 | 1.5 | 2 | 0.33 | 0 | 1 | 100 | ◎ | 95 | ○ | ○ | 1.82 | 285 | 0.60 | 2.4 | 0.13 | 13 | |
| Control example | 8 | 0 | 2 | 2 | – | 3 | 0 | 100 | ○ | 92 | ○ | ○ | 1.75 | 270 | 0.50 | 1.8 | 0.20 | 15 | Because of pulp added, % change of length and % water absorption are inferior. |
| | 9 | 2 | 0 | 2 | – | 0 | 1 | 100 | Δ | 95 | ○ | ○ | 1.82 | 260 | 0.30 | 1.4 | 0.14 | 13 | The surface appearance is slightly poorer. The impact strength is slightly lower. |

Claims

1. A wet-formed inorganic article comprising, on a dry basis, 0.1 to 1.5 weight percent of a superfine organic synthetic fiber (A) having a size of 0.056 to 0.56 dtex (0.05 to 0.5 denier), a strength of at least 53 cN/tex (6 grams per denier) and an aspect ratio of 200 through 1500, 0.5 to 5.0 weight percent of a regular-size organic synthetic fiber (B) having a size of 0.67 to 22 dtex (0.6 to 20 deniers), a strength of at least 53 cN/tex (6 grams per denier) and an aspect ratio of 200 through 1500, 0.01 to 5 weight percent of an inorganic dispersing agent, a suitable amount of a high molecular flocking agent and the remainder of a hydraulic inorganic material, (A) and (B) taken together accounting for 0.6 to 6.5 weight percent and (A)/(B) being in the range of 0.1 to 1.

2. The wet-formed inorganic article according to Claim 1, wherein (A)/(B) is in the range of 0.2 to 0.5.

3. The wet-formed inorganic article according to Claim 1 wherein said organic synthetic fibers (A) and (B) are both polyvinyl alcohol type fibers or polyacrylonitrile type fibers or either one of (A) and (B) is a polyvinyl alcohol type fiber with the other being a polyacrylonitrile type fiber.

4. The wet-formed inorganic article according to Claim 1 wherein said organic synthetic fibers (A) and (B) are both polyvinyl alcohol type fibers.

5. A method of producing a wet-formed inorganic article comprising adding 5 to 500 ppm of a high molecular flocking agent to a hydraulic material slurry at a stage preceding a wet-forming stage, said hydraulic material slurry comprising, on a dry basis, 0.1 to 1.5 weight percent of a superfine organic. synthetic fiber (A) having a size of 0.056 to 0.56 dtex (0.05 to 0.5 denier), a strength of at least 53 cN/tex (6 grams per denier), and an aspect ratio of 200 through 1500, 0.5 to 5.0 weight percent of a regular size organic synthetic fiber (B) having a size of 0.67 to 22 dtex (0.6 to 20 deniers), a strength of at least 53 cN/tex (6 grams per denier), and an aspect ratio of 200 through 1500, (A) and (B) taken together accounting for 0.6 to 6.5 weight percent and (A)/(B) being in the range of 0.1 to 1, 0.01 to 5 weight percent of an inorganic dispersing agent and the remainder of a hydraulic material such as cement, and wet-forming the whole mixture.

6. The method of producing a wet-formed inorganic article according to Claim 5 wherein the ratio (A)/(B) is in the range of 0.2 to 0.5.

7. The method of producing a wet-formed inorganic article according to Claim 5 wherein said organic synthetic fibers (A) and (B) are both polyvinyl alcohol type fibers or polyacrlonitrile type fibers or one of them is a polyvinyl alcohol type fiber with the other being a polyacrylonitrile type fiber.

8. The method of producing a wet-formed inorganic article according to Claim 5 wherein said organic synthetic fibers (A) and (B) are both polyvinyl alcohol type fibers.

Patentansprüche

1. Durch Naßverfahren hergestellter anorganischer Forkörper, enthaltend auf Trockenbasis 0,1 bis 1,5 Gew.-% einer hochfeinen organischen synthetischen Faser (A) mit einer Größe von 0,056 bis 0,56 dtex (0,05 bis 0,5 Denier) einer Faserfestigkeit von mindestens 53 cN/tex (6 g/Denier) und einem Streckungsverhältnis von 200 bis 1500, 0,5 bis 5,0 Gew.-% einer normal dimensionierten organischen synthetischen Faser (B) mit einer Größe von 0,67 bis 22 dtex (0,6 bis 20 Denier) einer Faserfestigkeit von mindestens 53 cN/tex (6 g/ Denier) und einem Streckungsverhältnis von 200 bis 1500, 0,01 bis 5 Gew.-% eines anorganischen Dispergierittels, eine geeignete Menge eines hochmolekularen Flockungsmittels und ein hydraulisches anorganisches Material als den Rest, wobei (A) und (B) zusammengenommen 0,6 bis 6,5 Gew.-% betragen und (A)/(B) in einem Bereich von 0,1 bis 1 vorliegt.

2. Durch Naßverfahren hergestellter anorganischer Formkörper nach Anspruch 1, wobei (A)/(B) in einem Bereich von 0,2 bis 0,5 vorliegt.

3. Durch Naßverfahren hergestellter anorganischer Forkörper nach Anspruch 1, wobei die organischen synthetischen Fasern (A) und (B) beide vom Polyvinylalkohol-Typ ider Polyacrylnitril-Typ sind, oder eine der beiden (A) und (B) ist eine Faser vom Polyvinylalkohol-Typ und die andere eine Faser vom Polyacrylnitril-Typ.

4. Durch Naßverfahren hergestellter anorganischer Formkörper nach Anspruch 1, wobei beide organischen synthetischen Fasern (A) und (B) vom Polyvinylalkohol-Typ sind.

5. Verfahren zur Herstellung eines durch Naßverfahren hergestellten anorganischen Forkörpers, dadurch gekennzeichnet, daß 5 bis 500 ppm eines hochmolekularen Flockungsmittels zu einer hydraulischen Aufschlämmung vor der Naßverfahrensstufe gegeben werden, wobei die hydraulische Aufschlämmung auf Trockenbasis 0,1 bis 1,5 Gew.-% einer hochfeinen organischen synthetischen Faser (A) mit einer Größe von 0,056 bis 0,56 dtex (0,05 bis 0,5 Denier) einer Faserfestigkeit von mindestens 53 cN/tex (6 g/Denier) und einem Streckungsverhältnis von 200 bis 1500, 0,5 bis 5,0 Gew.-% einer normal dimensionierten organischen synthetischen Faser (B) mit einer Größe von 0,67 bis 22 dtex (0,6 bis 20 Denier) einer Faserfestigkeit von mindestens 53 cN/tex (6 g/Denier) und einem Streckungsverhältnis von 200 bis 1500, wobei (A) und (B) zusammen genommen 0,6 bis 6,5 Gew.-% betragen und (A)/(B) in einem Bereich von 0,1 bis 1 vorliegt, 0,01 bis 5 Gew.-% eines anorganischen Dispergierittels und ein hydraulisches Material, wie Zement, als den Rest enthält und das Gesamtgemisch einem Naßverfahren unterworfen wird.

10

6. Verfahren zur Herstellung eines durch Naßverfahren hergestellten anorganischen Forkörpers gemäß Anspruch 5, wobei das Verhältnis von (A)/(B) in einem Bereich von 0,2 bis 0,5 vorliegt.

7. Verfahren zur Herstellung eines durch Naßverfahren hergestellten anorganischen Formkörpers gemäß Anspruch 5, wobei die organischen synthetischen Fasern (A) und (B) beide vom Polyvinylalkohol-Typ oder Polyacrylnitril-Typ sind, oder eine der beiden ist eine Faser vom Polyvinylalkohol-Typ und die andere eine Faser vom Polyacrylnitril-Typ.

8. Verfahren zur Herstellung eines durch Naßverfahren hergestellten anorganischen Forkörpers nach Anspruch 5, wobei beide organischen synthetischen Fasern (A) und (B) vom Polyvinylalkohol-Typ sind.

**Revendications**

1. Article minéral formé par voie humide, comprenant, sur la base des poids secs, 0,1 à 1,5 % en poids d'une fibre synthétique organiques superfine (A) ayant une finesse de 0,056 à 0,56 dtex (0,05 à 0,5 denier), une résistance d'au moins 53 cN/tex (6 grammes par denier) et un rapport d'aspect de 200 à 1500, 0,5 à 5,0 % en poids d'une fibre synthétique organique de finesse normale (B) ayant une finesse de 0,67 à 22 dtex (0,6 à 20 deniers), une résistance d'au moins 53 cN/tex (6 grammes par denier) et un rapport d'aspect de 200 à 1500, 0,01 à 5 % en poids d'un agent dispersant minéral, une quantité appropriée d'un agent floculant de masse moléculaire élevée et le reste d'une matière minérale hydraulique, (A) et (B) représentant ensemble 0,6 à 6,5 % en poids et (A)/(B) étant dans l'intervalle de 0,1 à 1.

2. Article minéral formé par voie humide conforme à la revendication 1, dans lequel (A)/(B) est dans l'intervalle de 0,2 à 0,5.

3. Article minéral formé par voie humide suivant la revendication 1, dans lequel ces fibres synthétiques organiques (A) et (B) sont toutes deux des fibres du type alcool polyvinylique ou des fibres du type polyacrylonitrile, ou bien une des fibres (A) et (B) est une fibre du type alcool polyvinylique, l'autre étant une fibre du type polyacrylonitrile.

4. Article minéral formé par voie humide suivant la revendication 1, dans lequel ces fibres synthétiques organiques (A) et (B) sont toutes deux des fibres de type alcool polyvinylique.

5. Procédé de fabrication d'un article minéral formé par voie humide comprenant l'addition 5 à 500 ppm d'un agent floculant de masse moléculaire élevée à une bouillie de matière hydraulique à un stade précédant le stade de formation par voie humide, cette bouillie de matière hydraulique comprenant, sur la base des poids secs, 0, 1 à 1,5 % en poids d'une fibre synthétique organique superfine (A) ayant une finesse de 0,056 à 0,56 dtex (0,05 à 0,5 denier), une résistance d'au moins 53 cN/tex (6 grammes par denier) et un rapport d'aspect de 200 à 1500, 0,5 à 5,0 % en poids d'une fibre synthétique organique de finesse normale (B), ayant une finesse de 0,67 à 22 dtex (0,6 à 20 deniers), une résistance d'au moins 53 cN/tex (6 grammes par denier) et un rapport d'aspect de 200 à 1500, (A) et (B) représentant ensemble 0,6 à 6,5 % en poids et (A)/(B) étant dans l'intervalle de 0, 1 à 1, 0,01 à 5 % en poids d'un agent dispersant minéral et le reste d'une matière hydraulique telle que le ciment, et la formation par voie humide de la totalité du mélange.

6. Procédé de fabrication d'un article minéral formé par voie humide suivant la revendication 5, dans lequel le rapport (A)/(B) est dans l'intervalle de 0,2 à 0,5.

7. Procédé de fabrication d'un article minéral formé par voie humide suivant la revendication 5, dans lequel ces fibres synthétiques organiques (A) et (B) sont toutes deux des fibres du type alcool polyvinylique ou des fibres du type polyacrylonitrile ou bien l'une d'elles est une fibre du type alcool polyvinylique, l'autre étant une fibre du type polyacrylonitrile.

8. Procédé de fabrication d'un article minéral formé par voie humide suivant la revendication 5, dans lequel ces fibres synthétiques organiques (A) et (B) sont toutes deux des fibres du type alcool polyvinylique.